# EUROPÄISCHE PATENTSCHRIFT

(11) **EP 1 215 032 B1**
(45) Veröffentlichungstag und Bekanntmachung des Hinweises auf die Patenterteilung: **24.10.2007**
(21) Anmeldenummer: 01126539.4
(22) Anmeldetag: 14.11.2001
(51) Int. Cl.: B29C 47/08, B29C 47/12

(54) **Düsenanordnung zur Coextrusion**
Nozzle assembly for coextrusion
Corps de buse pour le coextrusion

(30) Priorität: 15.12.2000 DE 10062590
(43) Veröffentlichungstag der Anmeldung: 19.06.2002
(73) Patentinhaber: FRÄNKISCHE ROHRWERKE GEBR. KIRCHNER GmbH & Co KG, D-97486 Königsberg (DE)
(72) Erfinder: Schmidt, Hans-Ullrich, 97461 Hofheim (DE); Schütz, Udo, 97496 Burgpreppach (DE); Schulz, Jürgen, 97437 Hassfurt (DE)
(74) Vertreter: Schwabe - Sandmair - Marx

(56) Entgegenhaltungen:
- EP-A- 0 243 516
- EP-A- 0 834 386
- WO-A-96/28294
- DE-A- 4 010 404
- GB-A- 994 567

## Beschreibung

Die Erfindung betrifft eine Düsenanordnung für die Coextrusion, wobei ein Extrudern zugewandter Verteilerabschnitt vorgesehen ist, über den Extrusionsmassen austragbar sind und wobei ein Düsenabschnitt zur Coextrusion der Extrusionsmassen vorgesehen ist, gemäß dem Oberbegriff des Patentanspruchs 1.

Bei Extrudern bzw. Strangpressvorrichtungen sind derartige Ausgestaltungen von Düsenanordnungen geläufig, siehe z.B. DE-A-4010404. Ein bekannter Coextrusions-Spritzkopf ist üblicherweise an wenigstens einen Extruder in der Form angebracht, dass der Düsensatz gegen einen anderen Düsensatz ausgetauscht werden kann, beispielsweise um andere Rohrdurchmesser, Schichtprofile für Rohre oder dgl. ausbilden zu können. Dabei muss der Anschlussbereich zwischen dem Abschnitt der Düsen und dem Verteilerabschnitt des Spritzkopfes, der selten ausgewechselt wird, erheblichen Drücken widerstehen können.

Wird ein Düsensatz eines Spritzkopfes für die Coextrusion ausgewechselt, müssen nach dem Stand der Technik die diversen Abschnitte des Düsensatzes, mit dem der Spritzkopf bestückt ist, der Reihe nach von dem Verteilerabschnitt des Coextrusions-Spritzkopfes abgebaut und vom Extrudat gereinigt werden. Daraufhin müssen die entsprechenden Abschnitte des Düsensatzes, auf den die Produktionseinrichtung umgerüstet werden soll, angebracht werden. Die diversen Abschnitte müssen zueinander justiert und eingestellt werden, um ein brauchbares Produkt extrudieren zu können. Die Justierung erfordert einen erheblichen Zeitaufwand und im Verlaufe des Justierungsprozesses wird ein mangelhaftes Produkt erzeugt, das sich wirtschaftlich nicht verwerten lässt. Es werden hier also sehr teure Maschinen, ein Extruder sowie daran anschließende Produktionsmaschinen, etwa ein Korrugator, über längere Zeit deaktiviert, bis die Umrüstung des Spritzkopfes abgeschlossen ist.

Bei der Demontage und Reinigung der Abschnitte des Düsensatzes im heißen Zustand besteht eine Unfall- und Beschädigungsgefahr. D.h., das Aufbauen der Düsenteile birgt in sich eine nicht unerhebliche Beschädigungsgefahr und das Reinigen der Düsenteile muss im heißen Zustand erfolgen, wobei mit einer Wärmequelle nachgewärmt werden muss. Dies ist eine aufwändige Tätigkeit, die zum Verkratzen der Oberfläche der Düsenteile führt, wobei Kratzer später durch Polieren entfernt werden müssen. Dieses führt jeweils zu einem Materialabtrag, der letztlich einen Verschleiß mit sich bringt.

Aus der EP 0 243 516 A1 ist eine Extrusionsvorrichtung bekannt, bei der von einem Extruder eine Extrusionsmasse beigeführt wird und in einem Anschlussblock in zwei Masseströme aufgeteilt wird, um zwei Düsenauslässen zugeführt zu werden.

Eine entsprechende Offenbarung ist der EP 0 834 386 A1 zu entnehmen, wobei hier noch der Strömungsquerschnitt von zwei Spritzkanälen unabhängig verändert werden kann, um Zentrierungsprobleme bzw. Schichtdickenprobleme am Rohrprodukt nach Möglichkeit ausregeln zu können.

Zusammenfassend lässt sich folglich festhalten, dass bei Coextrusionsvorrichtungen aus mehreren Extrudern nach dem Stand der Technik sowohl große Ausfallzeiten, Materialausschuss als auch Verschleißerscheinungen am Düsensatz des Spritzkopfes selbst in Kauf genommen werden müssen, um einen Spritzkopf von einem Produkt auf ein anderes Produkt umstellen zu können.

Es ist die Aufgabe gemäß der vorliegenden Erfindung, Düsenanordnungen nach dem Stand der Technik so weiterzubilden, dass die aufgezeigten Nachteile zumindest teilweise ausgeräumt werden.

Insbesondere soll gemäß der Erfindung eine Möglichkeit geschaffen werden, um einen Düsensatz für die Coextrusion besonders schnell auswechseln zu können.

Diese Aufgabe wird durch eine Düsenanordnung mit den Merkmalen des Patentanspruchs 1 gelöst. Zweckmäßige Ausführungsformen der erfindungsgemäßen Düsenanordnung gehen aus den Unteransprüchen hervor.

Die gemäß der Erfindung erzielbaren Vorteile beruhen auf einer Düsenanordnung, bei der eine Montage- und Anschlussbasis zwischen dem Verteilerabschnitt und dem Düsenabschnitt vorgesehen ist. Vorteilhafterweise ist es damit möglich, den Austrittsdüsenabschnitt in einer bestimmten Montageanordnung beizubehalten, die auch bei der Demontage des Montage- und Anschlussabschnittes mit dem Düsenabschnitt gegenüber dem Verteilerabschnitt erhalten bleibt. Ist später ein anderer Düsenabschnitt, der ebenfalls vorjustiert auf einer Montage- und Anschlussbasis fixiert ist, an dem Verteilerabschnitt der Düsenanordnung des Spritzkopfes anzubringen, ist praktisch keine Justage bzw. quasi kein Probelauf des Spritzkopfes nötig, um ein fertiges Produkt herstellen zu können. Ferner ist es möglich, da kaum eine Justage der Düsenabschnitte des Coextrusions-Düsensatzes erforderlich ist, den gesamten Düsensatz auf eine gewünschte Betriebstemperatur, die für einen bestimmten Kunststoff eingestellt ist, vorgeheizt zu montieren, so dass die von der Produktionszeit ansonsten abgehenden Umbau-, Montage- und Vorheizzeiten noch weiter reduziert werden können.

Sollten Justagearbeiten nötig sein, sind diese gegenüber dem Stand der Technik sehr reduziert, wenn nicht sogar vernachlässigbar.

Auch die mechanischen Belastungen des Düsensatzes können erheblich reduziert werden, da zusätzliche Belastungen durch eine Justage im Wesentlichen, wenn nicht sogar vollkommen vermieden werden können.

Natürlich kann die Montage- und Anschlussbasis auch aus mehreren Abschnitten aufgebaut sein und muss nicht zwangsläufig einstückig sein. Bevorzugt ist die einstückige Ausbildung der Montage- und Anschlussbasis. Jedoch kann auch eine beispielsweise zweistückige Montage- und Anschlussbasis in verringertem Ausmaße die oben aufgeführten Merkmale bereitstellen, die gemäß der Erfindung erzielbar sind. So ist es beispielsweise denkbar, dass bei einem Coextrusions-Düsensatz etwa zentrisch innen liegende Abschnitte des Düsensatzes für sich alleine montiert werden und lediglich auf weiter außen liegende Abschnitte des Düsensatzes auf die Montage- und Anschlussbasis vormontiert an dem Verteilerabschnitt angebracht werden.

Bevorzugt weist die Montage- und Anschlussbasis auch jeweilig Leitungskanäle auf, die die Extrusionsmasse von dem Verteilerabschnitt zu dem Düsenabschnitt weiterleiten. Dabei kann der Verteilerabschnitt und/oder kann der Düsenabschnitt Kanalerstreckungen aufweisen, die den Abstand zwischen diesen Abschnitten überbrücken, wobei die zum Einsatz kommende Montage- und Anschlussbasis entsprechende Ausnehmungen aufweist, um die Kanalerstreckungen aufnehmen zu können. Für diesen Fall ist es möglich, die Anzahl der Dichtungen zu reduzieren, so dass, obwohl die Montage- und Anschlussbasis zwischen dem Verteilerabschnitt und dem Düsenabschnitt angeordnet ist, die Anzahl der Dichtungen auf die Anzahl der nach dem Stand der Technik erforderlichen Dichtungen reduziert werden kann, da es für die Zuleitungen lediglich eine Stoßebene gibt, jedoch auch die Durchbrüche für die Verbindungsstege abzudichten sind.

Um auch bei hohen Drücken, denen die Extrusionsmasse regelmäßig ausgesetzt werden muss, eine hinreichende Dichtigkeit der erfindungsgemäßen Düsenanordnung gewährleisten zu können, sind an den jeweiligen Stoßstellen bzw.-ebenen Dichtmittel vorgesehen. So sind zwischen den besagten Kanalerstreckungen und dem anschließenden Verteiler- und/oder Düsenabschnitt Dichtungen vorgesehen. Sind die Dichtflächen auf die Montage- und Anschlussbasis verlegt, sind dementsprechend an deren zu den jeweils anschließenden Abschnitten zugewandten Seiten oder an den angrenzenden Abschnitten selbst entsprechende Dichtmittel vorgesehen.

Es hat sich als besonders vorteilhaft erwiesen, wenn Dichtmittel eingesetzt werden, die bei Auftreten einer Druckbelastung selbsttätig eine größere Dichtwirkung entfalten. Die Dichtwirkung eines entsprechenden Dichtmittels kann über einen großen Druckbereich proportional bzw. abhängig zum Druck ansteigen, d.h., es ist nicht nötig, mechanische Krafteinwirkungen aufzubringen, die eine Dichtung auf eine maximal zu erwartende Druckbelastung einstellen, da sich das Dichtmittel selbst automatisch in seiner Dichtwirkung an die Druckbelastung anpasst. Flüssiges Material, das im Falle der Leckage austritt, gibt auf die geometrische Form der Dichtung einen Druck, der zu einer verstärkten Anpressung der Dichtflächen der Dichtung an die angrenzenden Vorrichtungsabschnitte führt, so dass Lecks geschlossen werden. Auch können duktile Metalle für die Dichtungen eingesetzt werden. Zum Beispiel Kupfer, Zinn oder dgl. kommen hierfür in Betracht.

Vorteilhafterweise kann die Montage- und Anschlussbasis aus mehreren beispielsweise konzentrisch angeordneten Ringscheiben aufgebaut sein, zwischen denen Verbindungsleitungsringspalte vorgesehen sind, um die Extrusionsmasse passieren zu lassen.

Andererseits kann die Montage- bzw. Anschlussbasis vorteilhafterweise auch in der Form einer Steg- und/oder Lochscheibe konstruiert sein, so dass durch die Löcher bzw. zwischen den Stegen die weiterzuleitende Extrusionsmasse hindurchgeführt werden kann.

Vorteilhafterweise ist wenigstens eine Zentrieranordnung vorzusehen, um die Montage- und Anschlussbasis gegenüber dem Verteilerabschnitt zu zentrieren und die Abschnitte des Düsensatzes gegenüber der Montage- und Anschlussbasis zu justieren bzw. zu zentrieren. Hierzu sind bevorzugt jeweilige Zentrier- und Justieranordnungen vorhanden, so dass beispielsweise mittels der Einstellung einer oder mehrerer Schrauben eine Zentrierung durchgeführt werden kann.

Natürlich kann die gemäß der Erfindung vorgeschlagene Düsenanordnung entsprechend auch für mehr als zwei Extrusionsmassenströme ausgebildet werden. Gerade bei mehr als zweischichtigen Extrusionsprodukten, bei denen eine Justagearbeit noch bei weitem komplizierter und aufwändiger wäre, ist die vorliegende Erfindung besonders vorteilhaft anwendbar.

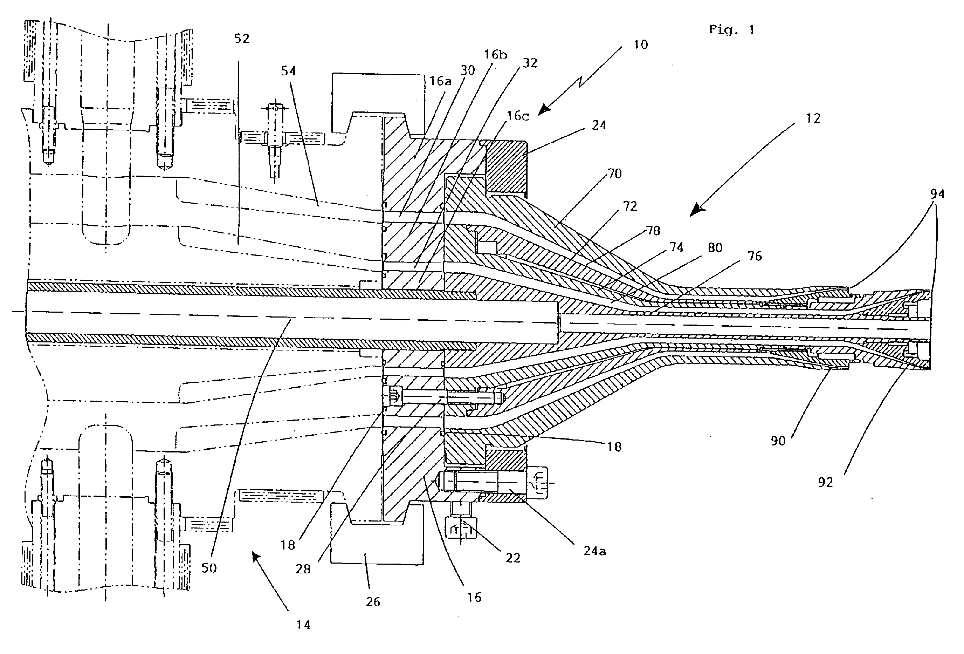

Die vorliegende Erfindung soll nun anhand einer bevorzugten Ausführungsform mit Merkmalen gemäß der Erfindung näher beschrieben werden. Dabei werden unter Bezugnahme auf die Darstellung weitere Zielsetzungen, Merkmale und Vorteile gemäß der Erfindung offenbart, wobei die
- Fig. 1: einen Längsschnitt einer Düsenanordnung mit Merkmalen gemäß der Erfindung zeigt.

In der Fig. 1 ist eine Coextrusionsdüsenanordnung 10 mit einem Verteilerabschnitt 14, einer Montage- und Anschlussbasis 16 und einem Düsenabschnitt 12 in einem axialen Längsschnitt dargestellt. Der Verteilerabschnitt 14 ist von herkömmlicher Art und braucht folglich hier nicht weiter erörtert zu werden. Über den Verteilerabschnitt sei lediglich bemerkt, dass dieser beispielsweise für eine Coextrusion mit zwei Schichten zwei Zulaufkanäle 52, 54 aufweist, über die eine oder jeweilige Extrusionsmassen zugeführt werden können. Mittig durch den Verteilerabschnitt 14 ist ein Versorgungskanal 50 angeordnet, über den beispielsweise Kühlflüssigkeit einem (nicht dargestellten) Kühl- und Kalibrierdorn zugeführt werden kann, der im Stand der Technik ebenfalls hinreichend bekannt ist und folglich hier nicht weiter erörtert werden muss. Der Dorn steht aus dem Kanal 50 aus einem Austrittsende 94 des Düsenabschnittes 12 hervor und ist innerhalb des austretenden warmplastisch verformbaren Extrusionsergebnisses angeordnet.

Der Düsenabschnitt 12 weist mehrere koaxial angeordneten Düsenabschnitte auf. Ein äußeres Düsenteil 70 bildet in Verbindung mit einem radial nach innen daran anschließenden Düsenteil 72 einen äußeren Düsenkanal 78, der in einen Ringdüsenringspalt 90 am Auslassende 94 des Düsenabschnittes 12 mündet. Radial nach innen schließt hieran eine entsprechende Anordnung eines äußeren Düsenteils 74 und eines inneren Düsenteils 76 an, die zusammen wiederum einen ringförmigen Fließkanal 80 bilden, der in einen Ringdüsenspalt 92 des Düsenabschnitts 12 mündet.

Erfindungsgemäß ist zwischen dem Verteilerabschnitt 14 und dem Düsenabschnitt 12 eine Montage- und Anschlussbasis 16 angeordnet. Die diversen Bestandteile des Düsenabschnittes 12 sind an dieser Basis 16 fixiert und die Basis 16 wiederum ist mit dem Verteilerabschnitt 14 in einer wohl definierten Lage verbindbar.

Die Montage- und Anschlussbasis 16 wird über einen massiven Spannring 26 oder dgl. mit dem Verteilerabschnitt 14 verbunden. Dabei kann die Basis 16 in Verbindung mit einem Anschlussflansch des Verteilerabschnittes 14 und in Verbindung mit dem Spannring 26 so zusammenwirken, dass eine exakt fluchtende Positionierung ohne maßgebliche Justagearbeiten möglich ist. Zwischen der Stirnfläche des Verteilerabschnittes 14 und der dieser gegenüberliegenden Stirnfläche der Montage- und Anschlussbasis 16 sind Dichtungen 18 vorgesehen, um die Fließkanäle 52, 54 an die Fließkanäle 30, 32 innerhalb der Basis 16 anzuschließen, gegenüber der Umgebung abzudichten.

Die Montage- und Anschlussbasis 16 weist mehrere konzentrisch angeordnete ringförmig ausgebildete Abschnitte 16a, 16b, 16c auf, zwischen denen die Fließkanäle 30, 32 ausgebildet werden. Die Fließkanäle 30, 32 können in der Form von kreisringförmig angeordneten Bohrungen oder durch über Stege verbundene Kreisringe ausgebildet sein.

Das Düsenteil 70 ist über einen Spannflansch 24 mit der Basis 16 verbunden, wobei einerseits eine Befestigung über eine Schraube 24a und andererseits eine Zentrierung über eine Schraube 22 ermöglicht werden kann. Auch in Bezug auf die Stoßfläche zwischen der Basis 16 und dem Düsenabschnitt 12 sind Dichtungen 18 vorgesehen.

Um eine schnelle Fixierung eines Düsenabschnittes 12 an einem Verteilerabschnitt 14 zu ermöglichen, ist es lediglich notwendig, den Spannring 26 und die Verspannung des Düsenteils 76 mit dem Verteilerabschnitt 14 zu öffnen bzw. zu lösen, die angeflanschte Basis 16 mit dem darin befestigten Düsenabschnitt 12 einstückig zu entfernen und eine andere Basis 16 mit einem daran fertig justiert festgelegten anderen Düsenabschnitt 12 wiederum über den Spannring 26 festzulegen. Eine Demontage und Reinigung der einzelnen Düsenteile, aus denen der Düsenabschnitt 12 zusammengesetzt ist, erübrigt sich folglich und es ist möglich, eine sachgerechte Justierung ohne großen Zeitaufwand und ohne die Produktion einer größeren Menge an Ausschuss zu erzielen, wobei gleichzeitig der Düsenabschnitt von Verschleiß durch Justagetätigkeiten weitestgehend verschont bleibt.

## Patentansprüche

1. Düsenanordnung (10) für einen Coextrusionsprozess, mit einem Extrudern zugewandten für zwei oder mehr getrennte Extrusionsmassenströme eingerichteter Verteilerabschnitt (14) mit Fließkanälen (52, 54), über denen Extrusionsmassen austragbar sind, und mit einem Düsenabschnitt (12) zur Extrusion der Extrusionsmassen, die als eine Komponente wenigstens einen Kunststoff enthalten, **dadurch gekennzeichnet, dass** eine für zwei oder mehr getrennte Extrusionsmassenströme eingerichtete Montage- und Anschlussbasis (16) zwischen dem Verteilerabschnitt (14) und dem Düsenabschnitt (12) vorgesehen ist, über deren Fließkanäle (30, 32) die Fließkanäle (52, 54) in dem Verteilerabschnitt (14) an die Kanäle (78, 80) in dem Düsenabschnitt (12) angeschlossen sind, daß Dichmittel (18) an wenigstens einer Stoßstelle zwischen der Montage- und Anschlussbasis (16) und dem Verteilerabschnitt (14) vorgesehen sind, so dass die Fließkanäle (30, 32) der Montage- und Anschlussbasis (16) und die Fließkanäle (52, 54) des Verteilerabschnittes (14) gegenüber der Umgebung abgedichtet sind und daβ die Montage- und Anschlussbasis (16) den Düsenabschnitt (12) in einer bestimmten Montageanordnung zu halten vermag, die bei der Demontage der Montage- und Anschlussbasis (16) mit dem Düsenabschnitt (12) gegenüber dem Verteilerabschnitt (14) erhalten bleibt.

2. Düsenanordnung nach Anspruch 1, **dadurch gekennzeichnet, dass** die Dichtmittel (18) bei Auftreten von Druck selbsttätig eine größere Dichtkraft bzw. -wirkung entfalten.

3. Düsenanordnung nach einem der Ansprüche 1 oder 2, **dadurch gekennzeichnet, dass** die Montage- und Anschlussbasis (16) mehrere Ringscheiben (16a, 16b, 16c) umfasst, zwischen denen sich unterbrochene Verbindungsleitungsringspalte (30, 32) ergeben, um die Extrusionsmasse passieren zu lassen.

4. Düsenanordnung nach einem der Ansprüche 1 bis 3, **dadurch gekennzeichnet, dass** die Montage- und Anschlussbasis (16) als Steg- und/oder Lochscheibe ausgebildet ist, wobei die Löcher bzw. Freiräume zwischen den Stegen die Extrusionsmasse durchlassen.

5. Düsenanordnung nach einem der Ansprüche 1 bis 4, **dadurch gekennzeichnet, dass** wenigstens eine Zentrieranordnung (22) vorgesehen ist, um die Montage- und Anschlussbasis (16) gegenüber dem Verteilerabschnitt (14) zu zentrieren und die Abschnitte des Düsensatzes (12) gegenüber der Montage- und Anschlussbasis (16) zu justieren bzw. zu zentrieren, wobei bevorzugt jeweilige Zentrierorgane vorgesehen sind.

## Claims

1. An extrusion die assembly (10) for a coextrusion process, having a distributor portion (14) with flow channels (52, 54) that faces extruders and is equipped for two or more separate streams of extrusion compounds, via which extrusion compounds can be discharged, and having an extrusion die portion (12) for the extrusion of the extrusion compounds, which contain at least one plastic as a constituent,
**characterised in that** a mounting and connecting base (16) equipped for two or more separate streams of extrusion compounds is provided between the distributor portion (14) and the extrusion die portion (12), and via the flow channels (30, 32) of said base the flow channels (52, 54) in the distributor portion (14) are connected to the channels (78, 80) in the extrusion die portion (12),
**in that** sealing means (18) are provided on at least one abutment location between the mounting and connecting base (16) and the distributor portion (14), so that the flow channels (30, 32) of the mounting and connecting base (16) and the flow channels (52, 54) of the distributor portion (14) are sealed from the surrounding area,
and **in that** the mounting and connecting base (16) can hold the extrusion die portion (12) in a determined mounting arrangement, which is maintained relative to the distributor portion (14) when the mounting and connecting base (16) with the extrusion die portion (12) is dismantled.

2. An extrusion die assembly according to Claim 1,
**characterised in that** the sealing means (18) automatically produce a larger sealing force or action when pressure is applied.

3. An extrusion die assembly according to one of Claims 1 or 2,
**characterised in that** the mounting and connecting base (16) comprises several annular disks (16a, 16b, 16c), between which interrupted annular slots (30, 32) in connecting lines are formed in order to allow the extrusion compound to pass.

4. An extrusion die assembly according to one of Claims 1 to 3,
**characterised in that** the mounting and connecting base (16) is designed as a webbed disk and/or perforated disk, whereby the perforations or the spaces between the webs allow for the passage of the extrusion compound.

5. An extrusion die assembly according to one of Claims 1 to 4,
**characterised in that** in at least one centring arrangement (22) is provided for the centring of the mounting and connecting base (16) relative to the distributor portion (14) and for aligning or centring the portions of the extrusion die set (12) relative to the mounting and connecting base (16), whereby preferably respective centring members are provided.

## Revendications

1. Agencement de buses (10) pour un processus de co-extrusion, comportant une portion de distribution (14) tournée vers des extrudeuses, aménagée pour deux ou plusieurs flux massiques d'extrusion séparés et pourvue de canaux d'écoulement (52, 54) via lesquels peuvent être éjectées des pâtes d'extrusion, et comportant une portion à buses (12) pour l'extrusion des pâtes d'extrusion qui contiennent comme composant au moins une matière plastique, **caractérisé en ce qu'**une base de montage et de raccordement (16) aménagée pour deux ou plusieurs flux massiques d'extrusion séparés est prévue entre la portion de distribution (14) et la portion à buses (12), base qui comprend des canaux d'écoulement (30, 32) via lesquels les canaux d'écoulement (52, 54) dans la portion de distribution (14) sont raccordés aux canaux (78, 80) dans la portion à buses (12), **en ce que** des moyens d'étanchéité (18) sont prévus à au moins un emplacement de jointure entre la base de montage et de raccordement (16) et la portion de distribution (14), de sorte que les canaux d'écoulement (30, 32) de la base de montage et de raccordement (16) et les canaux d'écoulement (52, 54) de la portion de distribution (14) sont étanchés par rapport à l'environnement, et **en ce que** la base de montage et de raccordement (16) est capable de tenir la portion à buses (12) dans un agencement de montage déterminé qui, lors du démontage de la base de montage et de raccordement (16), reste maintenu avec la portion à buses (12) en regard de la portion de distribution (14).

2. Agencement de buses selon la revendication 1, **caractérisé en ce que** les moyens d'étanchéité (18) développent automatiquement une force ou un effet d'étanchéité plus important(e) lors de l'apparition d'une pression.

3. Agencement de buses selon l'une des revendications 1 ou 2, **caractérisé en ce que** la base de montage et de raccordement (16) comprend plusieurs rondelles (16a, 16b, 16c) entre lesquelles se présentent des intervalles annulaires interrompus formant conduit de liaison (30, 32) pour faire passer la pâte d'extrusion.

4. Agencement de buses selon l'une des revendications 1 à 3, **caractérisé en ce que** la base de montage et de raccordement (16) est réalisée sous forme de plaque à barrette et/ou à trou, les trous ou les espaces libres entre les barrettes laissant passer la pâte d'extrusion.

5. Agencement de buses selon l'une des revendications 1 à 4, **caractérisé en ce qu'**il est prévu au moins un dispositif de centrage (22) pour centrer la base de montage et de raccordement (16) par rapport à la portion de distribution (14) et pour ajuster ou centrer les portions du lot de buses (12) par rapport à la base de montage et de raccordement (16), en prévoyant de préférence des organes de centrage respectifs.
